# EUROPÄISCHE PATENTSCHRIFT

(11) **EP 0 693 401 B1**
(45) Veröffentlichungstag und Bekanntmachung des Hinweises auf die Patenterteilung: **30.05.2001**
(21) Anmeldenummer: 95110403.3
(22) Anmeldetag: 04.07.1995
(51) Int. Cl.: B60R 16/02, B60R 21/00

(54) **Datenübertragungsverfahren in einem für den Einsatz in Kraftfahrzeugen geeigneten Datenverarbeitungssystem**
Data transmission process adapted for a data processing system in vehicles
Procédé de transmission de données, adapté pour un système de traitement de données dans des véhicules

(30) Priorität: 21.07.1994 DE 4425845
(43) Veröffentlichungstag der Anmeldung: 24.01.1996
(73) Patentinhaber: TEMIC TELEFUNKEN microelectronic GmbH, 90411 Nürnberg (DE)
(72) Erfinder: Fendt, Günter, D-86529 Schrobenhausen (DE); Spies, Hans, D-85276 Pfaffenhofen (DE); Hora, Peter, D-86529 Schrobenhausen (DE); Zechmair, Derrick, D-86529 Schrobenhausen (DE)
(74) Vertreter: Maute, Hans-Jürgen, Dipl.-Ing.

(56) Entgegenhaltungen:
- EP-A- 0 424 907
- DE-A- 3 811 217
- US-A- 4 327 441
- PATENT ABSTRACTS OF JAPAN vol. 015, no. 383 (E-1116), 27.September 1991 & JP 03 154428 A (FUJITSU TEN LTD), 2.Juli 1991,

## Beschreibung

Die Erfindung betrifft ein Verfahren zur pulsweitenmodulierten Datenübertragung gemäß dem Oberbegriff des Anspruchs 1.

Die Insassen von Kraftfahrzeugen werden heute üblicherweise durch Rückhaltevorrichtungen, wie Airbags sowohl für Fahrer als auch für Beifahrer und Gurtstrammer wirksam geschützt, wenn das Fahrzeug frontal mit einem Hindernis oder einem anderen Fahrzeug kollidiert. Für jede dieser Rückhaltevorrichtungen ist eine Endstufe zu deren Ansteuerung notwendig, die zentral von einer Steuereinheit, dem sogenannten Airbag-Auslösegerät überwacht und gesteuert wird. Des weiteren ist es bekannt, Seiten-Airbags für Fahrer als auch für Beifahrer vorzusehen, die bei einer Kollision bzw. einem Aufprall von der Seite des Kraftfahrzeuges ausgelöst wird, um auch bei einer solchen Seitenkollision die Sicherheit der Fahrzeuginsassen zu gewährleisten. Die für einen solchen Seitenairbag erforderliche Auslösezeit ist gegenüber derjenigen im Falle eines Frontalaufpralles zur Auslösung des Fahrer- und Beifahrerairbags aufgrund des kurzen Deformationsweges bei einem Seitencrash sehr gering. Daher ist es notwendig, neben den schon im zentralen Airbag-Steuergerät vorhandenen Beschleunigungssensoren noch zusätzliche, mindestens zwei ausgelagerte Sensoren vorzusehen, die jeweils im Türbereich angeordnet sind, mit denen die geforderten kurzen Auslösezeiten realisierbar sind. Diese zusätzlichen ausgelagerten Sensoren sind zwingend erforderlich, da das Beschleunigungssignal des in dem zentralen Airbag-Steuergerät vorhandenen Sensors aufgrund der größeren Entfernung zum Krafteinleitungspunkt nicht ausgewertet werden kann, da dieses zum Zeitpunkt der geforderten Auslösezeit noch nicht in den Mittelraum des Fahrzeugs, wo der zentrale Beschleunigungssensor angeordnet ist, vorgedrungen ist.

Um die kurzen Auslösezeiten von weniger als 5 msec einhalten zu können, müssen die ausgelagerten Sensoren ständig durch die zentrale Steuereinheit abgefragt werden. Diese Abfragedaten betreffen verschiedene Systemzustände und müssen in noch kürzeren Zeitintervallen sicher übertragen werden. Die Übertragungsfrequenz ist nach oben beschränkt, da hohe Frequenzen abgeschirmte Kabel erfordern, die aus Kostengründen nicht erwünscht sind. Ferner würden die schnellen Schaltflanken bei hohen Frequenzen hohe Störpegel verursachen, weswegen die maximale Übertragungsfrequenz auf einer Datenleitung 20 kHz nicht überschritten werden sollte. Schließlich müßte in der zentralen Steuereinheit für jeden ausgelagerten Sensor eine eigene serielle Schnittstelle vorhanden sein, um die seriellen Daten einzulesen. Somit müßte die zentrale Steuereinheit wenigstens zwei solcher seriellen Schnittstellen aufweisen, nämlich eine Schnittstelle zum ausgelagerten Sensor auf der linken Seite des Kraftfahrzeuges sowie eine Schnittstelle zum ausgelagerten Sensor auf der rechten Seite des Kraftfahrzeuges. Da als Steuereinheit in der Regel handelsübliche Mikroprozessoren eingesetzt werden und diese in der Regel nur eine einzige serielle Schnittstelle aufweisen, ist deren Einsatz nicht möglich. Auch ein Einlesen der Daten mittels eines Multiplex-Verfahrens ist nicht möglich, da beide ausgelagerte Sensoren gleichzeitig abgefragt werden müssen.

Aus diesem Grunde schlägt die gattungsbildende EP 0 424 907 A2 ein Verfahren zur pulsweitenmodulierten Datenübertragung vor, wodurch eine Auslöseschaltung für ein Insassenschutzsystem in Kraftfahrzeugen als Steuereinheit über eine Datenleitung mit mehreren Sensoreinheiten als Peripherieeinheiten verbunden ist, wobei ein pulsbreitenmoduliertes Signal (PWM-Signal) als kleinste Informationseinheit durch die Peripherieeinheit erzeugt an die Steuereinheit übertragen wird.

Dabei ist zu entnehmen, dass die Datenübertragung in solchen Kraftfahrzeuganwendungen zwar äußerst störanfällig ist, jedoch diese Datenübertragungsfehler mittels eines Parity-Checks erkannt werden können (vgl. Spalte 10, ab Zeile 10, siehe auch Spalte 12, Zeile 48 ff.).

Während der Datenübertragung kann jedoch das PWM-Signal insgesamt verfälscht werden, so dass ein Parity-Check allein noch nicht ausreicht, um sicherzustellen, dass keine fehlerhaften PWM-Signale übernommen werden.

Die JP 03 154 428 (vgl. Patent Abstracts vol. 015, no. 383) weist darüber hinaus ein plusweitenmoduliert codiertes Datenübertragungsverfahren zwischen zwei Rechnern auf, bei dem die Ist-Periodendauer des Datenimpulses erfasst und die damit übertragene Informationseinheit im Verhältnis der Abweichung von Ist-Periodendauer und einer vorgegebenen Soll-Periodendauer korrigiert wird.

Dies ist zumindest im konkreten, nunmehr gattungsbildend beanspruchten Anwendungsfall der Datenübertragung in einem Insassenschutzsystem nicht vertretbar. Jeder Versuch einer Datenkorrektur würde zumindest in diesem Anwendungsgebiet zu einem unkalkulierbaren Risiko, weil die Grenze der tatsächlich noch zutreffend korrigierbaren Abweichung nicht klar bestimmbar ist. Zudem müssen die Konsequenzen einer fehlerhaften Korrektur für das Verhalten der Steuereinheit berücksichtigt werden. So könnte es aufgrund einer möglicherweise fehlerhaften Datenkorrektur zu Fehlreaktionen, insbesondere zu einer Fehlauslösung der Insassenschutzeinrichtungen kommen.

Die Aufgabe der vorliegenden Erfindung besteht daher darin, ein demgegenüber geeigneteres Datenübertragungsverfahren anzugeben.

Diese Aufgabe wird durch die kennzeichnenden Merkmale des Patentanspruches 1 gelöst. Die Peripherieeinheit erzeugt zur Übertragung einer Informationseinheit ein pulsbreitenmoduliertes Signal (PWM-Signal), wobei die Periodendauer des PWM-Signals als Sollwert vorgegeben ist. Damit wird jede Informationseinheit innerhalb einer bestimmten Zeitspanne übertragen, die der Periodendauer des PWM-Signals entspricht. Nun wird die Periodendauer jedes übertragenen PWM-Signals ermittelt und mit der ursprünglich vorgegebenen Periodendauer verglichen. Bei fehlender Übereinstimmung wird die übertragene Informationseinheit von der Steuereinheit nicht übernommen. Dadurch kann eine gestörte Datenübertragung eindeutig erkannt werden und der entsprechende Informationsgehalt ignoriert werden.

Bei einer vorteilhaften Weiterbildung des erfindungsgemäßen Verfahrens erfolgt der Datenaustausch zwischen der Peripherie und der Steuereinheit aufgrund eines von der Peripherieeinheit erzeugten Interrupt-Signals. Für die entsprechende Übertragungsart weist ein als Steuereinheit verwendeter Mikroprozessor in der Regel mehrere Capture-Input-Eingänge auf. Diese Datenübertragungsmethode verzichtet auf eine Synchronisation, da sich die Übertragung durch die Interrupt-Signale selbständig synchronisiert. Vorzugsweise werden die Informationseinheiten bei der Verwendung der Interrupt-Technik seriell übertragen, wobei der Pegelwechsel zur Übertragung der ersten Informationseinheit als Interrupt-Signal dient.

Das Datenübertragungsverfahren findet erfindungsgemäß Anwendung für eine Auslöseschaltung für Insassenschutzsysteme als Steuereinheit, die über jeweils eine Datenleitung mit mehreren ausgelagerten Sensoreinheiten als Peripherieeinheiten verbunden ist. Solche ausgelagerten Sensoreinheiten dienen beispielsweise als Crash-Sensor zur Detektion einer Seitenkollision eines Kraftfahrzeuges, die zur Auslösung des jeweiligen Seiten-Airbags führt. Vorzugsweise beträgt dabei die Datenübertragungsdauer einer Informationseinheit, das entspricht also der Periodendauer eines PWM-Signals, 500 µsec. Damit können die geforderten schnellen Auslösezeiten von weniger als 5 msec eingehalten werden, da die Anforderung der Auslösebereitschaft innerhalb dieser Zykluszeit von 500 µsec erfolgt. Die Informationen der ausgelagerten Sensoren werden somit alle 500 µsec von der Steuereinheit abgefragt, was einer Datenabfrage von 2 kHz entspricht.

Im folgenden soll das erfindungsgemäße Datenübertragungsverfahren anhand einer für den Einsatz in einem Kraftfahrzeug geeigneten Datenverarbeitungsanlage im Zusammenhang mit den Zeichnungen dargestellt werden. Es zeigen:
- Figur 1: ein Blockschaltbild einer Steuereinheit für ein Insassenschutzsystem zur Durchführung des erfindungsgemäßen Verfahrens,
- Figur 2: Impulsschemas von verschiedenen PWM-Signalen zur Übertragung von unterschiedlichen Dateninhalten und
- Figur 3: eine Auflistung der Impuls-Pausen-Verhältnisse der in Figur 2 dargestellten PWM-Signale.

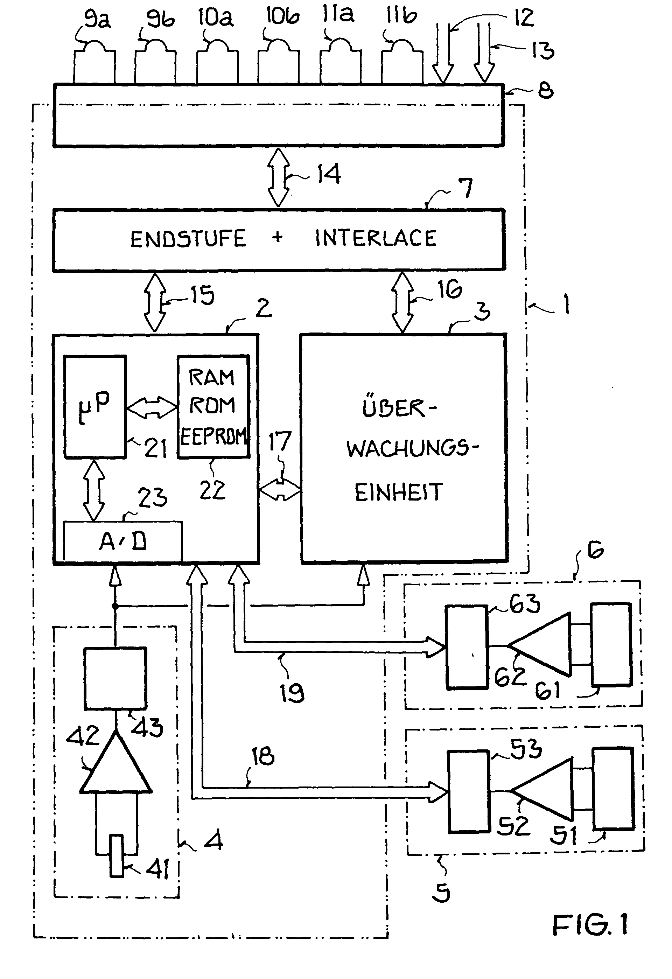

Die in Figur 1 dargestellte Auslöseschaltung 1 dient als Steuereinheit für eine Sicherheitseinrichtung in Kraftfahrzeugen, beispielsweise Fahrer-, Beifahrer- und Seitenairbags, und enthält einen zentralen Beschleunigungsaufnehmer 4, eine Zentraleinheit 2, eine Überwachungseinheit 3, eine Endstufen- und Interfaceschaltung 7 und schließlich eine die Verbindung zu den Auslösemitteln, also den Zündpillen der Airbags herstellende Steckereinheit 8. Schließlich sind mit dieser Auslöseschaltung 1 noch zwei sogenannte ausgelagerte Sensoreinheiten 5 und 6 über eine Leitung 18 bzw. 19 mit der Zentraleinheit 2 verbunden. Diese zur Erkennung eines Seitenstoßes vorgesehenen Sensoreinheiten 5 und 6 enthalten in der Regel als Sensor Stoß- bzw. Berührungsdetektoren oder sind als pre-crash-Sensoren ausgebildet und sind hierzu nahe am Türbereich des Kraftfahrzeuges untergebracht. Die die Auslöseschaltung 1 bildenden Komponenten sind auf einer Elektronikplatine angeordnet und zusammen mit einem Gehäuse an einer zentralen Stelle im Kraftfahrzeug untergebracht. Der Beschleunigungsaufnehmer 4 der Auslöseschaltung 1 enthält einen Beschleunigungssensor 41, dessen Sensorsignale mittels einer Verstärkereinheit 42 verstärkt und anschließend von einer Filterschaltung 43 von Störimpulsen befreit werden. Diese gefilterten Sensorsignale werden von einer A/D-Wandlerschaltung 23 der Zentraleinheit 2 digitalisiert und zur Auswertung einer CPU 21 zugeführt. Die Zentraleinheit 2 enthält außerdem eine Speicheranordnung 22, in der unter anderem ein Auslösealgorithmus abgelegt ist.

Der genannten Zentraleinheit 2 werden außerdem die Sensorsignale der beiden ausgelagerten Sensoreinheiten 5 und 6 über die schon genannten Datenleitungen 18 und 19 zugeführt. Diese beiden Sensoreinheiten 5 und 6 sind jeweils identisch aufgebaut und enthalten beispielsweise einen Stoßdetektor 51 bzw. 61, eine Verstärkereinheit 52 bzw. 62 zur Verstärkung der ihr zugeführten Sensorsignale sowie einen Mikroprozessor 53 bzw. 63, dessen Zweck darin besteht, einen Seitenaufprall zu erkennen und eine entsprechende Information an die Zentraleinheit 2 weiterzuleiten.

Da die Auslöseschaltung 1 während der gesamten Betriebsdauer des Kraftfahrzeuges funktionsfähig sein muß, enthält diese zusätzlich eine sogenannte Überwachungseinheit 3, die Prüf- und Referenzimpulse zur Überprüfung der Sensorschaltungen 4, 5 und 6 sowie der Zentraleinheit 2 erzeugt. Diese Überwachungseinheit 3 ist über eine Leitung 17 mit der Zentraleinheit 2 verbunden. Die digitalen Sensorsignale der ausgelagerten Sensoreinheiten 5 und 6 werden ihr über die Zentraleinheit 2 und die Leitung 17 übermittelt.

Der schon genannte Schaltungsblock 7 enthält die Endstufen zur Ansteuerung der Auslösemittel, also der Zündpillen für die Airbags und dient ferner als Schnittstelle zwischen den die Auslösemittel aufweisenden Laststromkreisen in den Endstufen, der Zentraleinheit 2 und der Überwachungseinheit 3. Ferner werden über diese Schnittstellenfunktion die Signale einer Sitzbelegungserkennung mittels einer Leitung 12 und Diagnosesignale über eine weitere Leitung 13 über die Steckereinheit 8 und einer Leitung 14 geführt. Die Endstufensignale werden über diese Leitung 14 und die Steckereinheit 8 einem Fahrerairbag 9a, einem Beifahrerairbag 9b, einem Seitenairbag 10a, einem Seitenairbag 10b sowie Gurtstraffereinheiten 11a und 11b für Fahrer und Beifahrer zugeführt.

Im Falle eines Seitenaufpralles sind die Auslösezeiten gegenüber einem Frontalaufprall aufgrund der geringen Deformationswege sehr kurz und müssen in der Regel weniger als 5 msec betragen. Diese kurzen Auslösezeiten sind erforderlich, da das Beschleunigungssignal in der Beschleunigungseinheit 4 der zentral im Kraftfahrzeug angeordneten Auslöseschaltung 1 aufgrund der größeren Entfernung zum Krafteinleitungspunkt noch nicht ausgewertet werden kann, da das Beschleunigungssignal zum Zeitpunkt der geforderten Auslösezeit noch nicht in den Mittelraum des Fahrzeuges vorgedrungen ist. Daher müssen die von den ausgelagerten Sensoreinheiten 5 und 6 erzeugten digitalen Sensorsignale zusätzlich von der Zentraleinheit 2 mitausgewertet werden. Dabei ist eine Auslösebereitschaft innerhalb einer Zykluszeit von 500 µsec für die Seitenairbags gefordert. Somit muß die Zentraleinheit 2 die Information der ausgelagerten Sensoren alle 500 µsec abfragen und auswerten. Dieses entspricht einer Datenabfrage von 2 kHz. So müssen beispielsweise Informationen abgefragt werden, die folgende Funktionen betreffen :
- Funktion 1: System arbeitet ohne Fehler,
- Funktion 2: System will auslösen,
- Funktion 3: System befindet sich in einem Alert-Zustand (entspricht dem Beginn eines Crashes),
- Funktion 4: System befindet sich nahe der Auslöseschwelle und
- Funktion 5: System erkennt einen Seitenaufprall von der entgegengesetzten Seite.

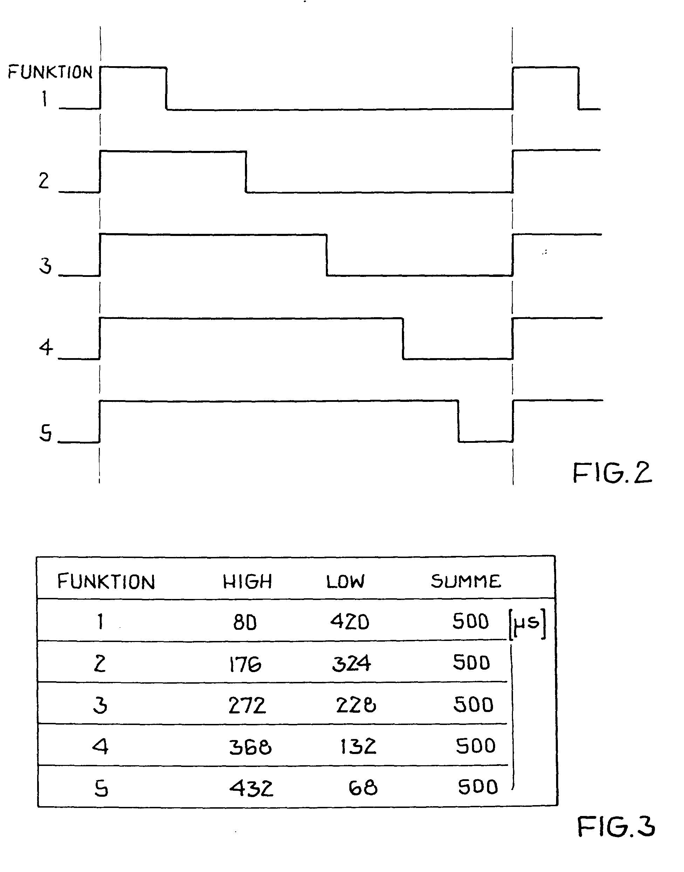

Diese fünf Funktionen werden jeweils als Daten mittels eines von den Sensoreinheiten 5 und 6 erzeugten PWM (pulsbreitenmodulierten)-Signals alle 500 µsec übertragen. Das entsprechende Impulsdiagramm zur Übertragung jeder dieser obengenannten Funktionen ist in Figur 2 dargestellt. Dabei wird die Dateninformation durch das Tastverhältnis codiert wie es beispielsweise aus Figur 2 ersichtlich ist und beispielhaft mit konkreten Zahlenwerten nach Figur 3 aufgeführt ist. Dabei beträgt die Summe aus der Impulsdauer, die dem High-Pegel auf der Leitung entspricht und der Impulspause, die dem Low-Zustand auf der Leitung entspricht, für jedes PWM-Signal annähernd 500 µsec.

Die Fehlerüberwachung wird dadurch realisiert, daß die Zentraleinheit 2 der Auslöseschaltung 1 die Impulsdauer, also im vorliegenden Fall die Zeitdauer von 500 µsec überwacht. Beispielsweise wird die Zeitdauer zwischen zwei steigenden oder zwei fallenden Flanken bewertet. Wenn diese Zeitdauer nicht ungefähr 500 µsec beträgt, liegt ein Störsignal auf der Datenleitung. Dadurch wird eine gestörte Datenübertragung durch die Zentraleinheit 2 eindeutig erkannt und hat zur Folge, daß der entsprechende Dateninhalt von der Zentraleinheit 2 nicht übernommen wird.

Trotz der geringen Übertragungsfrequenz auf den Datenleitungen der ausgelagerten Sensoreinheiten 5 und 6 können die geforderten kurzen Auslösezeiten eingehalten werden. Gleichzeitig kann aufgrund der niedrigen Übertragungsfrequenz bei diesen Datenleitungen auf abgeschirmte Kabel verzichtet werden.

Gemäß Figur 1 sind die beiden Datenleitungen 18 und 19 auf sogenannte "Capture-Inputs" der Zentraleinheit 2 geführt. Dabei handelt es sich um Eingänge, die interruptfähig sind. Ein entsprechendes Interrupt-Signal wird von den Sensoreinheiten 5 und 6 erzeugt und stellt beispielsweise einen ersten Pegelwechsel eines PWM-Signals dar. Dadurch entfällt die ständige Abfrage der Eingänge, wodurch wertvolle Rechnerkapazität eingespart wird. Ferner entfällt bei dieser Interrupt-Methode die Synchronisation, da sich die Übertragung durch die Interrupt-Signale an den Capture-Inputs selbständig synchronisiert.

Das erfindungsgemäße Datenübertragungsverfahren kann nicht nur mit Vorteil bei Steuereinheiten mit ausgelagerten Sensoren für die Auslösung von Airbags und Gurtstraffer, wie es in Figur 1 dargestellt ist, eingesetzt werden, sondern ist ebenfalls im Bereich des Motormanagements einsetzbar, wobei an die Stelle der ausgelagerten Sensoreinheiten 5 und 6 Temperatur-, Druck- und Luftmassensensoren treten.

## Patentansprüche

1. Verfahren zur pulsweitenmodulierten Datenübertragung zwischen einer Auslöseschaltung (1) für ein Insassenschutzsystem in Kraftfahrzeugen als Steuereinheit und mehreren, jeweils über eine Datenleitung (18, 19) damit verbundenen Sensoreinheiten (5, 6) als Peripherieeinheiten, wobei
a) ein pulsbreitenmoduliertes Signal (PWM-Signal) als kleinste Informationseinheit durch die Peripherieeinheit (5, 6) erzeugt an die Steuereinheit (1) übertragen wird, wobei die Periodendauer jedes PWM-Signals als Sollwert vorgegeben ist,
**gekennzeichnet durch folgende Verfahrensschritte:**
b) Ermittlung der Periodendauer als Istwert des übertragenen PWM-Signals,
c) Vergleich des Istwertes mit dem Sollwert, wobei bei fehlender Übereinstimmung die übertragene Informationseinheit von der Steuereinheit (1) nicht übernommen wird.

2. Verfahren nach Anspruch 1, **dadurch gekennzeichnet, daß** der Datenaustausch durch ein von der Peripherieeinheit (5, 6) erzeugtes Interrupt-Signal erfolgt.

3. Verfahren nach Anspruch 2, **dadurch gekennzeichnet, daß** der Pegelwechsel zur Übertragung der ersten Informationseinheit als Interrupt-Signal dient.

## Claims

1. Process for pulse-width-modulated data transmission between a trigger circuit (1), as control unit, for a passenger protection system in motor vehicles and a plurality of sensor units (5, 6), each connected to the trigger circuit via a data line (18, 19), as peripheral units, wherein
a) a pulse-width-modulated signal (PWM signal), which is generated by the peripheral unit (5, 6), is transmitted as the smallest information unit to the control unit (1), wherein the period of each PWM signal is predetermined as desired value,
**characterised by the following process steps:**
b) Determining the period as actual value of the transmitted PWM signal,
c) Comparing the actual value with the desired value, wherein the transmitted information unit is not accepted by the control unit (1) if the two values do not correspond.

2. Process according to Claim 1, characterised in that the data exchange takes place by means of an interrupt signal which is generated by the peripheral unit (5, 6).

3. Process according to Claim 2, characterised in that the change in level for transmitting the first information unit serves as interrupt signal.

## Revendications

1. Procédé de transmission de données avec modulation d'impulsions en durée entre un circuit de déclenchement (1) pour un système de protection de passagers dans des véhicules automobiles, en tant qu'unité de commande, et plusieurs unités formant capteurs (5,6), qui sont reliées respectivement à l'unité de commande par l'intermédiaire d'une ligne de transmission de données (18,19), en tant qu'unités périphériques, et selon lequel
a) un signal modulé selon une modulation d'impulsions en durée (signal MID), produit en tant que plus petite unité d'information par l'unité périphérique (5,6), est transmis à l'unité de commande (1), la durée de la période de chaque signal MID étant prédéterminée en tant que valeur de consigne,
caractérisé par les étapes opératoires suivantes :
b) détermination de la durée de la période en tant que valeur réelle du signal MID transmis,
c) comparaison de la valeur réelle à la valeur de consigne, auquel cas, lorsqu'il n'y a pas coïncidence, l'unité d'information transmise n'est pas transférée par l'unité de commande (1).

2. Procédé selon la revendication 1, caractérisé en ce que l'échange de données est réalisé au moyen d'un signal d'interruption produit par l'unité périphérique (5,6).

3. Procédé selon la revendication 2, caractérisé en ce que l'alternance de niveau est utilisée pour la transmission de la première unité d'information en tant que signal d'interruption.
